# DEMANDE DE BREVET EUROPEEN

(11) **EP 1 732 339 A1**
(43) Date de publication de la demande: **13.12.2006**
(21) Numéro de dépôt: 06115319.3
(22) Date de dépôt: 12.06.2006
(51) Int. Cl.: H04Q 7/36

(54) **Procédé de diffusion en mode broadcast d'un contenu multimédia dans un canal cellulaire de troisième génération, canal et système de communication associés**

(30) Priorité: 10.06.2005 FR 0505942
(71) Demandeur: Bouygues Telecom, 92100 Boulogne Billancourt (FR)
(72) Inventeur: Bertrand, Eric, 78220 Viroflay (FR); Fournier, Jean-Philippe, 91430 Igny (FR); Passet Georges, 78720 Cernay La Ville (FR); Matillon Philippe, 78120 Rambouillet (FR)
(74) Mandataire: Le Forestier, Eric

(57) **Abrégé**

L'invention concerne, selon un premier aspect, un procédé de diffusion numérique générale en mode broadcast ou multicast d'un contenu multimédia à un ensemble de terminaux de téléphonie mobile connectés à un réseau de communication cellulaire de troisième génération, caractérisé en ce que le contenu multimédia est diffusé dans un canal cellulaire d'une bande de fréquences de troisième génération.

Selon un autre aspect, l'invention concerne un canal de communication cellulaire d'une bande de fréquences de troisième génération transportant au moins une forme d'onde d'un contenu multimédia diffusé en mode broadcast ou multicast.

Selon encore un autre aspect, l'invention concerne un système de communication cellulaire de troisième génération doté d'un service de diffusion numérique générale en mode broadcast ou multicast d'un contenu multimédia par l'intermédiaire d'un canal cellulaire d'une bande de fréquences de troisième génération, à un ensemble de terminaux de téléphonie mobile dotés de moyens de type tuner leur permettant de recevoir les signaux transmis sur ledit canal cellulaire.

## Description

Le domaine de l'invention est celui de la diffusion numérique générale en mode broadcast/multicast d'un contenu multimédia à un ensemble de terminaux de téléphonie mobile connectés à un réseau de communication cellulaire de deuxième ou troisième génération.

Un exemple de diffusion broadcast/multicast envisagé par l'invention est celui de la diffusion générale de chaînes de télévision en direct à destination des usagers d'un terminal de téléphonie mobile.

On précise ici qu'un mode de diffusion broadcast permet la diffusion permanente d'un même contenu sur l'ensemble du réseau à l'ensemble des usagers. Le mode de diffusion multicast permet quant à lui une diffusion ciblée (par exemple à destination des usagers ayant souscrit un abonnement) d'un même contenu à un groupe d'usagers.

On précise par ailleurs que l'on entend par réseau de communication cellulaire de troisième génération, un réseau permettant de proposer aux usagers, partout et à tout moment, des services multimédias (voix, audio, données...), tel que défini par l'organisme de normalisation 3GPP. Il s'agit en particulier d'un réseau à noyau UMTS (acronyme anglo-saxon de « Universal Mobile Telecommunication System » pour Système de Télécommunication Mobile Universel).

La technologie UMTS n'est pas adaptée à la diffusion de la télévision en temps réel. Le réseau UMTS est en effet un réseau unicast qui alloue un canal radio par utilisateur quoi qu'il arrive. Ainsi, à titre d'exemple, si dix personnes dans une cellule du réseau veulent regarder la même chaîne de télévision, le programme TV sera répliqué dix fois. Ceci consomme de la bande passante, ainsi que de la fréquence.

Il a donc été proposé d'employer des solutions de diffusion générale (broadcast ou multicast selon la terminologie anglo-saxonne consacrée) pour distribuer un même programme de télévision en temps réel vers tous les terminaux mobiles dans la zone de couverture d'un émetteur.

Pour réaliser une telle diffusion générale, plusieurs solutions sont aujourd'hui envisagées.
- La première solution consiste à doter le réseau UMTS de cette capacité de diffusion générale. La technologie MBMS (acronyme anglo-saxon de « Multimedia Broadcast Multicast Service»), définie auprès de l'organisme 3GPP chargé de normaliser l'UMTS, est ainsi une évolution fonctionnelle des réseaux cellulaires 2G et 3G (réseaux unicast) normalisée pour que ces réseaux puissent diffuser plus efficacement un contenu en mode broadcast/ multicast, cela en permettant le transport du contenu sur des canaux radio communs à tous les usagers (ou tout du moins à tous les usagers d'un même groupe en mode multicast).
   La technologie MBMS a toutefois été normalisée sur les bases de la norme R99 et ne profite pas des nouvelles améliorations introduites dans les versions suivantes de la norme (comme par exemple la nouvelle modulation HSDPA/HSUPA).
   Il est ainsi à craindre que cette technologie sera, lors de son introduction, réservée à la diffusion de contenus moins exigeants en terme de bande passante que la télévision en direct (par exemple pour la distribution de messages, de fichiers, etc.).
- Une autre solution consiste à considérer que la topologie du réseau UMTS n'est pas adaptée à la diffusion en direct de chaînes de télévision, et donc à privilégier des solutions alternatives, typiquement dérivées des standards de diffusion de contenu numérique à destination d'équipements fixes.
   - La technologie DVB-H (« Digital Video Broadcasting-Handheld ») est ainsi une norme dérivée de la solution DVB-T (« Digital Video Broadcasting-Terrestrial ») utilisée pour la diffusion de contenus multimédia sur des équipements fixes, par exemple pour l'offre télévisuelle TNT (Télévision Numérique Terrestre). La technologie DVB-H peut ainsi être vue comme étant une adaptation de la TNT aux contraintes de mobilité et de consommation d'un terminal de téléphonie mobile.
   - La technologie DMB-T (« Digital Multimedia Broadcasting Terrestrial ») est quant à elle dérivée de la norme européenne DAB (« Digital Audio Bradcating ») créée à l'origine pour la diffusion de services de radio numérique.
   - Encore une autre solution consiste à opter pour une solution satellite, telle par exemple la solution DMB-S (« Digital Multimedia Broadcasting Satellite »). Une telle solution satellite est toutefois limitée du fait qu'il existe des zones d'ombre (tunnels, intérieurs de bâtiments, etc.) non couvertes par le satellite, dans lesquelles la réception ne se fait pas correctement.

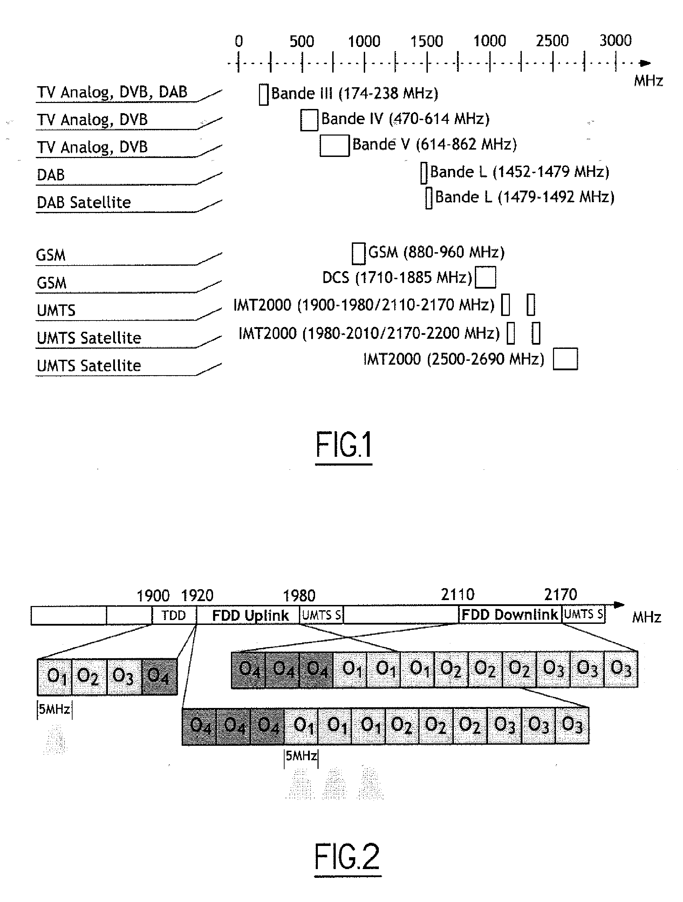

On a représenté sur la figure 1 les bandes de fréquence utilisées par ces différentes solutions.

Les services de télévision analogique (« TV analog » sur la figure), ainsi que les solutions DVB, utilisent les bandes de fréquence suivantes : la bande III (comprise entre 174 et 238 MHz), la bande IV (470-614 MHz) et la bande V (614-862 MHz).

Les solutions DAB utilisent la bande III ainsi que la bande L (1452-1479 MHz) en diffusion terrestre, et la bande L (1479-1492 MHz) en diffusion satellitaire.

On a également reporté sur cette figure 1, les bandes de fréquences utilisées par les réseaux de communication cellulaire de deuxième génération (GSM), et de troisième génération (UMTS).

Les bandes de fréquence 880-960 MHZ et 1710 -1885 MHz sont ainsi dédiées au GSM, tandis que les bandes de fréquence 1900-1980/2110-2170 MHZ sont dédiées à l'UMTS (les bandes 1980-2010/2170-2200 MHZ et 2500-2690 MHZ étant quant à elles dédiées à l'UMTS Satellite).

Les bandes de fréquences réservées aux communications cellulaires GSM ou UMTS et les bandes de fréquences réservées aux diffusions DVB ou DAB sont donc totalement différentes.

En particulier, en France, les autorités de gestion et d'attribution des différentes bandes de fréquences ne sont pas les mêmes. Ainsi le CSA (Conseil Supérieur de l'Audiovisuel) gère les fréquences correspondant aux technologies DVB/DAB, tandis que l'ARCEP (Autorité de Régulation des Communications Electroniques et des Postes) gère les fréquences utilisées par les communications cellulaires type GSM/UMTS.

Comme déjà mentionné précédemment, les solutions MBMS ne semblent pas satisfaisantes (notamment en terme de débit) pour offrir un service de télévision numérique sur terminal mobile présentant une qualité de service suffisante.

Les solutions DVB (par exemple le DVB-H) et DAB (par exemple le DMB-T) nécessitent quant à elles, pour diffuser le contenu multimédia vers les terminaux mobiles, la transformation des infrastructures existantes pour la diffusion de la TV numérique ou encore la réalisation d'un réseau particulier dédié à ces technologies, notamment pour fonctionner dans la bande de fréquences réservée correspondante.

Les terminaux de téléphonie doivent de leur côté incorporer des moyens de réception des signaux DVB ou DMB ; il faut alors typiquement intégrer dans un terminal mobile une antenne de télévision « classique » large bande VHF.

La présente invention vise à proposer une autre technique permettant de réaliser une diffusion générale, de type broadcast ou multicast, d'un contenu numérique multimédia à un ensemble de terminaux de téléphonie mobile, et plus précisément un technique qui soit adaptée à des terminaux connectés à un réseau de communication cellulaire deuxième ou troisième génération, ces terminaux étant dotés de moyens de type tuner permettant de recevoir les signaux transmis sur la fréquence porteuse d'un canal cellulaire de troisième génération.

Selon un premier aspect, l'invention concerne un procédé de diffusion numérique générale en mode broadcast ou multicast d'un contenu multimédia à un ensemble de terminaux de téléphonie mobile connectés à un réseau de communication cellulaire, caractérisé en ce que le contenu multimédia est diffusé dans un canal cellulaire d'une bande de fréquences de troisième génération.

Certains aspects préférés, mais non limitatifs, de ce procédé sont les suivants :
- il comporte une étape de transposition en fréquence de la porteuse du contenu réalisée de manière adaptée pour que la forme d'onde du contenu soit portée dans le canal cellulaire de troisième génération ;
- l'étape de transposition est adaptée pour que la forme d'onde du contenu soit portée dans le canal TDD alloué à un opérateur du réseau de communication cellulaire de troisième génération ;
- l'étape de transposition est adaptée pour que ladite forme d'onde soit portée dans l'un des canaux FDD de la liaison descendante alloués à un opérateur du réseau de communication cellulaire de troisième génération ;
- il peut en outre comporter un multiplexage de plusieurs formes d'ondes du contenu multimédia dans un même canal cellulaire de troisième génération ;
- deux canaux T-DMB peuvent être multiplexés dans un canal cellulaire UMTS ;
- le canal peut être le canal TDD alloué à un opérateur du réseau de communication cellulaire UMTS ;
- cinq (resp. huit) canaux T-DMB peuvent être multiplexés dans deux (resp. trois) canaux adjacents FDD de la liaison descendante alloués à un opérateur du réseau de communication cellulaire UMTS ;
- le contenu multimédia est typiquement un ensemble de chaînes de télévision, et le procédé peut en outre comporter une étape visant à faire porter une table d'indexation desdites chaînes par un seul desdits canaux T-DMB multiplexés ;
- le procédé peut comporter, préalablement à la diffusion, une étape d'ajustement de la forme d'onde du contenu multimédia pour respecter le gabarit des canaux cellulaires de troisième génération ;
- l'étape d'ajustement peut comprendre une opération consistant à ajuster la puissance de la forme d'onde pour la rendre compatible avec le gabarit des canaux cellulaires de troisième génération ;
- l'ajustement de puissance peut être réalisé de manière adaptée pour que la puissance de la forme d'onde du contenu soit inférieure à la puissance résiduelle maximale définie par ledit gabarit.

Selon un second aspect, l'invention concerne un canal de communication cellulaire d'une bande de fréquences de troisième génération, caractérisé en ce qu'il transporte au moins une forme d'onde d'un contenu multimédia diffusé en mode broadcast ou multicast.

Selon encore un autre aspect, l'invention concerne un système de communication cellulaire de deuxième ou troisième génération, caractérisé en ce qu'il comporte un service de diffusion numérique générale en mode broadcast ou multicast d'un contenu multimédia par l'intermédiaire d'un canal cellulaire d'une bande de fréquences de troisième génération, à un ensemble de terminaux de téléphonie mobile dotés de moyens de type tuner leur permettant de recevoir les signaux transmis sur ledit canal cellulaire.

D'autres aspects, buts et avantages de la présente invention apparaîtront mieux à la lecture de la description détaillée suivante de formes de réalisation préférées de celle-ci, donnée à titre d'exemple non limitatif, et faite en référence aux dessins annexés sur lesquels, outre la figure 1 déjà commentée :
- la figure 2 représente les bandes de fréquences de troisième génération, et notamment leur répartition entre différents opérateurs de téléphonie mobile ;
- la figure 3 représente de manière schématique le gabarit radio d'un canal cellulaire de troisième génération ;
- la figure 4 représente les spécifications de la bande de fréquences 3G attribué à un opérateur particulier ;
- les figures 5 et 6 illustrent un mode de réalisation possible de l'invention selon lequel plusieurs formes d'onde de type T-DMB de contenu numérique multimédia sont multiplexés dans un ou plusieurs canaux UMTS.

En référence à la figure 2, on a représenté la répartition des bandes de fréquences de troisième génération entre différents opérateurs O₁, O₂, O₃ et O₄ de téléphonie mobile. On a plus précisément pris ici l'exemple de la répartition des fréquences UMTS sur le territoire français (pour lequel à ce jour trois opérateurs disposent effectivement d'une licence 3G), mais on comprendra aisément que l'invention n'est en aucun cas limitée à ce cas de figure, et a vocation à s'étendre à tout réseau de communication cellulaire de troisième génération conforme aux conditions d'utilisation des fréquences 3G définies par l'organisme de normalisation 3GPP.

Chaque opérateur O₁-O₄ dispose :
- de trois canaux duplex dans la bande FDD (acronyme anglo-saxon de « Frequency Division Duplexing » pour duplexage par répartition en fréquence) ; les liaisons montantes et descendantes se faisant alors dans des bandes séparées (liaison montante dans la sous-bande 'FDD Uplink' comprise entre 1920 et 1980 MHz ; liaison descendante dans la sous-bande 'FDD Downlink' comprise entre 2110 et 2170 MHz) ;
- d'un canal half-duplex dans la bande TDD (acronyme anglo-saxon de « Time Division Duplexing » pour duplexage par répartition dans le temps) ; les liaisons montantes et descendantes se faisant alors dans la même bande TDD comprise entre 1900 et 1920 MHz.

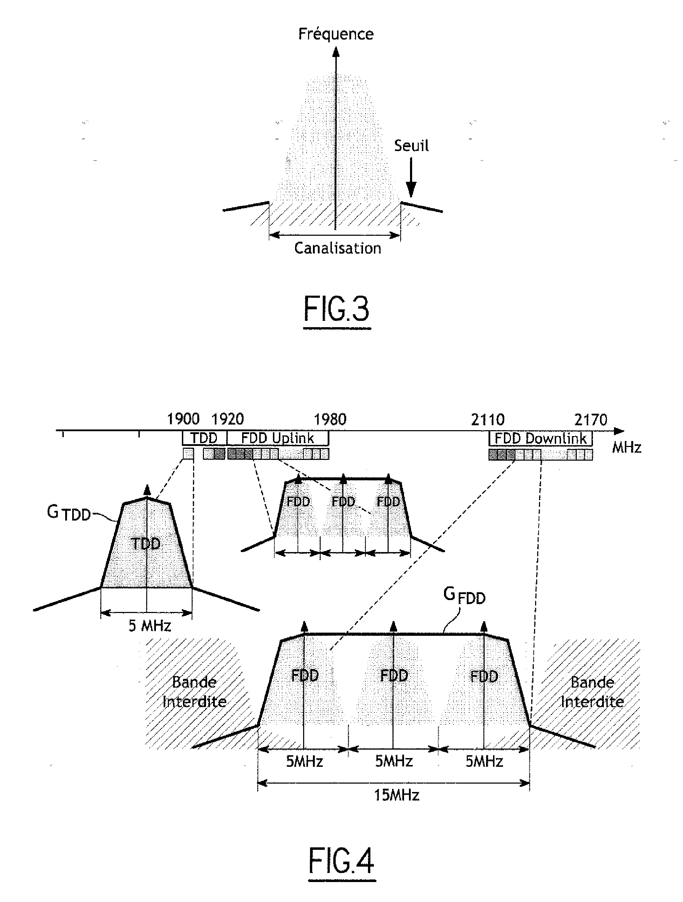

L'organisme 3GPP a défini les conditions d'utilisation des fréquences 3G, notamment pour garantir la cohabitation des systèmes des différents opérateurs, garantir l'inter-fonctionnement des matériels des constructeurs, et avoir un débit par fréquence le plus élevé possible (en limitant notamment les interférences d'une fréquence à l'autre). Ces conditions ont abouties à la définition d'un « gabarit radio » établissant une canalisation au-delà de laquelle toute la puissance émise doit être éliminée (filtrée), ainsi qu'un seuil définissant la puissance résiduelle maximale autorisée. La figure 3 représente de manière schématique un tel gabarit radio d'un canal cellulaire de troisième génération.

Dans le cas de l'UMTS, les émetteurs et récepteurs UMTS doivent respecter un gabarit radio présentant une canalisation de 5 MHz et un seuil de ― 57 dBc.

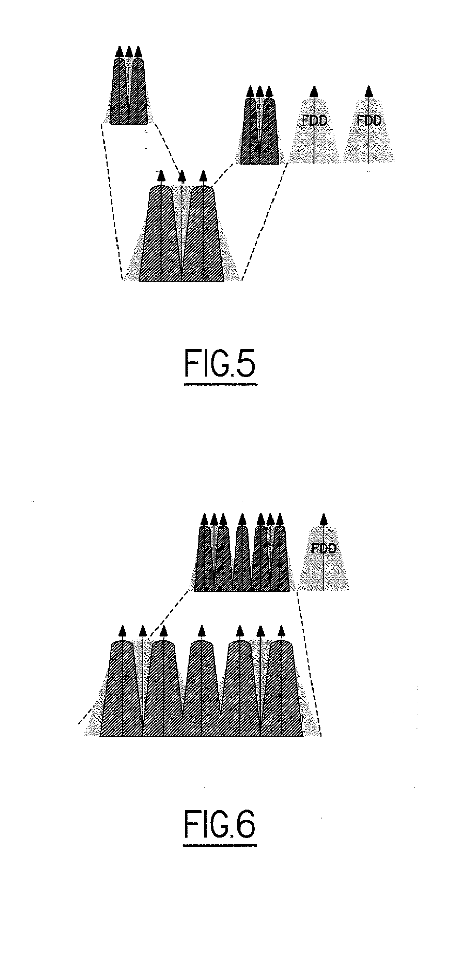

On a représenté sur la figure 4 les spécifications de la bande de fréquences 3G attribué à un opérateur particulier. Cet opérateur dispose ainsi d'un canal TDD, ainsi que trois canaux FDD adjacents en liaison montante et trois canaux FDD adjacents en liaison descendante.

Les zones situées de part et d'autre du canal TDD (gabarit G_{TDD}), et celles situées de part et d'autre de la zone formée par trois canaux FDD adjacents constituent ainsi des « bandes interdites » pour cet opérateur.

On notera que du fait de l'adjacence des canaux FDD, un gabarit G_{FDD} continu, commun aux trois canaux est défini (présentant en particulier une canalisation de 15 MHz).

L'invention propose de réaliser une diffusion de type broadcast ou multicast d'un contenu numérique multimédia à un ensemble de terminaux de téléphonie mobile connectés à un réseau de communication cellulaire de deuxième ou troisième génération, en utilisant pour cela la bande de fréquences de troisième génération. Les terminaux concernés par l'invention sont ceux dotés de moyens de type tuner permettant de recevoir les signaux transmis sur la fréquence porteuse d'un canal cellulaire de troisième génération. Il s'agit ainsi typiquement de terminaux 3G, ou encore de terminaux 2G disposant d'un tuner leur permettant de recevoir les signaux transmis dans une bande 3G.

Comme on l'a vu précédemment, les normes DVB-H et T-DMB sont prévues pour permettre la diffusion de contenus numériques multimédia. Mais le contenu est alors diffusé dans des bandes de fréquence qui ne sont pas adaptées aux terminaux 3G. Comme illustré sur la figure 1, ces bandes (bandes III, IV et V pour le DVB-H ou bande VHF pour T-DMB) ne correspondent aucunement aux bandes 3G.

Au contraire, comme mentionné ci-dessus, l'invention prévoit quant à elle que le contenu soit diffusé en mode broadcast/multicast dans la bande 3G.

Le procédé selon l'invention comporte à cet effet une étape de transposition de la fréquence de la porteuse de la forme d'onde du contenu multimédia de manière à ce que ladite forme d'onde soit portée dans un canal cellulaire de troisième génération.

Il peut ainsi s'agir d'une transposition en fréquence adaptée pour que la porteuse du contenu soit portée dans le canal TDD (de largeur 5 MHz, typiquement entre 1900 et 1920 MHZ) alloué à un opérateur, ou encore pour qu'elle soit portée dans l'un des canaux FDD de la liaison descendante alloués à un opérateur (les canaux FDD adjacents présentant une largeur totale 15 MHz, typiquement entre 2110 et 2170 MHz).

Cette transposition en fréquence peut notamment être réalisée à l'aide d'un oscillateur local asservi en phase sur le signal de référence utilisé par le modulateur broadcast, ce qui permet en particulier d'assurer un excellente stabilité du signal émis.

Une étape d'amplification du signal ainsi transposé en fréquence peut ensuite être réalisée; cette étape consiste par exemple à amplifier de quelques dizaines de Watt le signal transposé. Elle peut être réalisée en technologie état solide HEMT pour assurer de bonnes performances, notamment en terme de rendement, stabilité ou linéarité.

Le procédé selon l'invention peut en outre comporter, préalablement à la diffusion en elle-même dans la bande 3G, une étape d'ajustement de la forme d'onde du contenu multimédia pour respecter le gabarit des canaux cellulaires de troisième génération.

L'étape d'ajustement peut ainsi comprendre une opération consistant à ajuster la puissance de la forme d'onde du contenu multimédia pour la rendre compatible avec le gabarit des canaux cellulaires de troisième génération, notamment pour que la puissance résiduelle soit inférieure au seuil précité du gabarit 3G.

Pour réaliser cette étape d'ajustement, on ne retient que la partie dite « bande de base » du contenu multimédia, c'est-à-dire les signaux utiles portant l'information (par exemple signaux vidéo) en très basses fréquences (quelques MHz). Les protocoles fondamentaux (codage, modulation) de la technologie broadcast sont ainsi respectés.

On réalise ensuite une étape de pré-traitement, par exemple sous la forme d'un codage vidéo du type H264, visant à ne pas dégrader le contenu multimédia (sous la forme d'un signal vidéo typiquement).

Puis une opération de filtrage est réalisée pour que le contenu multimédia respecte les contraintes telecom, c'est-à-dire respecte le gabarit d'un canal cellulaire (ou en variante de plusieurs canaux cellulaires adjacents).

Cette opération est par exemple réalisée en mettant en oeuvre un filtre du type masque de spectre de canal, par exemple un filtre à ondes de surface, dont les paramètres principaux sont la largeur, la raideur de pente et le niveau de rejection.

A titre d'exemple, lorsqu'il s'agit de diffuser un contenu broadcast dans un canal cellulaire 3G, les paramètres du filtre de masque de spectre de canal sont par exemple les suivants :
- largeur du filtre à 3 dB : 3,84 MHz;
- raideur de pente de l'ordre de 20-30 dB/octave ;
- niveau de rejection supérieur à -70 dB à 5 MHz de la fréquence principale.

Le filtre est bien entendu adapté pour prendre en compte le nombre de canaux à diffuser, schématiquement en prévoyant une largeur de filtre plus importante lorsqu'il s'agit de diffuser dans plusieurs canaux adjacents.

Le signal ainsi filtré peut alors subir l'étape de transposition en fréquence détaillée précédemment.

Par ailleurs, on prévoit de manière avantageuse de filtrer (par un filtrage dit « de canal », en particulier à l'aide d'un filtre à pentes raides, par exemple un filtre à cavités) le signal transposé en fréquence pour s'assurer que le contenu broadcast diffusé dans un canal cellulaire n'interfère pas avec le contenu (broadcast ou cellulaire) porté par les canaux cellulaires adjacents.

Concernant ces étapes de transposition de la fréquence de la porteuse de la forme d'onde du contenu multimédia et d'adaptation de ladite forme d'onde, on notera que la technologie T-DMB est à ce titre avantageuse en ce qu'elle prévoit un gabarit (et notamment une canalisation de 1,536 MHZ) qui est particulièrement compatible avec le gabarit 3G (notamment avec la canalisation de 5MHz).

Il est ainsi possible de « rentrer » un canal T-DMB dans un canal UMTS en adaptant la fréquence de la porteuse du contenu de forme d'onde T-DMB pour que ladite porteuse se trouve dans la bande de fréquences d'un canal UMTS, et en ajustant ladite forme d'onde pour respecter le gabarit 3G.

Comme cela est représenté sur la figure 5, il est même possible de regrouper deux canaux T-DMB (en foncé sur la figure) dans un canal UMTS TDD ou FDD (en grisé sur la figure). Dans le cadre de ce mode de réalisation (mulitplexage de deux canaux T-DMB dans un canal 3G), deux fois le débit plein du T-DMB peut être atteint, soit 3 Mbits/s.

Dans un mode de réalisation alternatif de l'invention, représenté sur la figure 6, il est également possible de regrouper cinq canaux T-DMB dans deux canaux UMTS adjacents (canalisation de 10 MHZ de deux canaux FDD de la liaison descendante). Dans un tel cas de figure, un débit de 7,5Mbits/s est obtenu, mais on a alors rendu inutilisable les 10 MHZ des deux canaux FDD correspondants de la liaison montante.

De manière similaire, les trois canaux adjacents FDD de la liaison descendante (canalisation de 15 MHz) peuvent permettre de diffuser huit canaux T-DMB. Un débit de 12 Mbits/s peut alors être atteint, mais on a alors rendu inutilisable les 15 MHZ des trois canaux FDD correspondants de la liaison montante.

Par ailleurs, l'invention prévoit des moyens de synchronisation aptes à synchroniser les écoutes au niveau des récepteurs 3G. Il s'agit effectivement là de limiter les interférences entre les signaux en provenance de différents émetteurs 3G depuis lesquels se fait la diffusion broadcast/multicast du contenu multimedia (typiquement chaînes de télévision). On notera que cette synchronisation est d'autant plus avantageuse que l'on prévoit un multiplexage de plusieurs canaux T-DMB dans un ou plusieurs canaux 3G.

En outre, un canal T-DMB peut typiquement être utilisé pour diffuser cinq chaînes de télévision, une table d'indexation de ces chaînes étant alors généralement portée par le canal T-DMB. Dans le cadre des modes de réalisation discutés précédemment pour lesquels un multiplexage de plusieurs canaux T-DMB dans un ou plusieurs canaux 3G est réalisé, l'invention prévoit en outre une étape permettant de ne faire porter la table d'indexation des chaînes que par un seul canal T-DMB. On limite de la sorte la réplication de ladite table sur chaque canal T-DMB, et le débit global est alors amélioré. L'utilisation en est également facilitée, puisqu'il n'y a qu'un canal à écouter pour obtenir les programmes.

Bien entendu la présente invention n'est pas limitée à un procédé de diffusion en mode broadcast/multicast mais s'étend également à un canal de communication cellulaire d'une bande de fréquences de troisième génération, typiquement le canal TDD ou l'un et/ou l'autre des canaux FDD en UMTS, transportant au moins une forme d'onde d'un contenu multimédia diffusé en mode broadcast/multicast.

L'invention s'étend également à un système de communication cellulaire dans lequel est implémenté, comme cela a été indiqué précédemment, un service de diffusion numérique en mode broadcast/multicast d'un contenu multimédia par l'intermédiaire d'un canal cellulaire d'une bande de fréquences de troisième génération, à un ensemble de terminaux de téléphonie mobile dotés de moyens de type tuner leur permettant de recevoir les signaux transmis sur ledit canal cellulaire.

## Revendications

1. Procédé de diffusion numérique générale en mode broadcast ou multicast d'un contenu multimédia à un ensemble de terminaux de téléphonie mobile connectés à un réseau de communication cellulaire, **caractérisé en ce que** le contenu multimédia (T-DMB) est diffusé dans un canal cellulaire (TDD, FDD) d'une bande de fréquences de troisième génération.

2. Procédé selon la revendication précédente, **caractérisé en ce qu'**il comporte une étape de transposition en fréquence de la porteuse du contenu réalisée de manière adaptée pour que la forme d'onde du contenu soit portée dans le canal cellulaire de troisième génération.

3. Procédé selon la revendication précédente, **caractérisé en ce que** ladite étape de transposition est adaptée pour que la forme d'onde du contenu soit portée dans le canal TDD alloué à un opérateur du réseau de communication cellulaire de troisième génération.

4. Procédé selon la revendication 2, **caractérisé en ce que** ladite étape de transposition est adaptée pour que ladite forme d'onde soit portée dans l'un des canaux FDD de la liaison descendante alloués à un opérateur du réseau de communication cellulaire de troisième génération

5. Procédé selon l'une des revendications 2 à 4, **caractérisé en ce qu'**il comporte en outre un multiplexage de plusieurs formes d'ondes du contenu multimédia dans un même canal cellulaire de troisième génération.

6. Procédé selon la revendication précédente, **caractérisé en ce que** deux canaux T-DMB sont multiplexés dans un canal cellulaire UMTS.

7. Procédé selon la revendication précédente, **caractérisé en ce que** le canal UMTS est le canal TDD alloué à un opérateur du réseau de communication cellulaire UMTS.

8. Procédé selon la revendication 6, **caractérisé en ce que** cinq canaux T-DMB sont multiplexés dans deux canaux adjacents FDD de la liaison descendante alloués à un opérateur du réseau de communication cellulaire UMTS.

9. Procédé selon la revendication 8, **caractérisé en ce que** huit canaux T-DMB sont multiplexés dans les trois canaux adjacents FDD de la liaison descendante alloués à l'opérateur.

10. Procédé selon l'une des revendications 5 à 9, dans lequel le contenu multimédia est un ensemble de chaînes de télévision, **caractérisé en ce qu'**il comporte en outre une étape visant à faire porter une table d'indexation desdites chaînes par un seul desdits canaux T-DMB multiplexés.

11. Procédé selon l'une des revendications précédentes, **caractérisé en ce qu'**il comporte, préalablement à la diffusion, une étape d'ajustement de la forme d'onde du contenu multimédia pour respecter le gabarit (G_{TDD}, G_{FDD}) des canaux cellulaires de troisième génération.

12. Procédé selon la revendication précédente, **caractérisé en ce que** l'étape d'ajustement comprend une opération consistant à ajuster la puissance de la forme d'onde pour la rendre compatible avec le gabarit des canaux cellulaires de troisième génération.

13. Procédé selon la revendication précédente, **caractérisé en ce que** l'ajustement de puissance est réalisé de manière adaptée pour que la puissance de la forme d'onde du contenu soit inférieure à la puissance résiduelle maximale définie par ledit gabarit.

14. Canal de communication cellulaire (FDD, TDD) d'une bande de fréquences (UMTS) de troisième génération, **caractérisé en ce qu'**il transporte au moins une forme d'onde (T-DMB) d'un contenu multimédia diffusé en mode broadcast ou multicast.

15. Système de communication cellulaire, **caractérisé en ce qu'**il comporte un service de diffusion numérique en mode broadcast ou multicast d'un contenu multimédia (T-DMB) par l'intermédiaire d'un canal cellulaire (FDD, TDD) d'une bande de fréquences (UMTS) de troisième génération, à un ensemble de terminaux de téléphonie mobile dotés de moyens de type tuner leur permettant de recevoir les signaux transmis sur ledit canal cellulaire.
